# EUROPÄISCHE PATENTSCHRIFT

(11) **EP 2 956 293 B1**
(45) Veröffentlichungstag und Bekanntmachung des Hinweises auf die Patenterteilung: **05.02.2020**
(21) Anmeldenummer: 14713752.5
(22) Anmeldetag: 05.02.2014
(51) Int. Cl.: B29D 30/06, B29C 33/20

(54) **VORRICHTUNG UND VERFAHREN ZUM JUSTIEREN DER HÖHE EINER FORM EINER REIFENHEIZPRESSE SOWIE REIFENHEIZPRESSE**
DEVICE AND METHOD FOR ADJUSTING THE HEIGHT OF A MOULD OF A TYRE CURING PRESS, AND TYRE CURING PRESS
PROCÉDÉ ET DISPOSITIF DE RÉGLAGE DE HAUTEUR D'UN MOULE D'UNE PRESSE DE VULCANISATION DE PNEUS ET PRESSE DE VULCANISATION DE PNEUS

(30) Priorität: 18.02.2013 DE 102013002980
(43) Veröffentlichungstag der Anmeldung: 23.12.2015
(73) Patentinhaber: Harburg-Freudenberger Maschinenbau GmbH, 21079 Hamburg (DE)
(72) Erfinder: BAHLKE, Stefan, 21337 Lüneburg (DE)
(74) Vertreter: Klickow & Wetzel PartGmbB
(86) Internationale Anmeldenummer: PCT/DE2014/000048
(87) Internationale Veröffentlichungsnummer: WO 2014/124623

(56) Entgegenhaltungen:
- EP-A1- 2 327 523
- EP-A2- 0 368 297
- WO-A1-2010/146554
- DE-A1- 4 434 406
- DE-A1- 19 817 822
- DE-A1-102009 012 191
- JP-A- S6 248 514
- JP-A- H11 114 965
- US-A- 3 368 239

## Beschreibung

Die Erfindung betrifft eine Vorrichtung und ein Verfahren zum Justieren der Höhe einer Form einer Reifenheizpresse, bei dem die Form mindestens zwei relativ zueinander positionierbare Formteile aufweist, wobei die Vorrichtung einen im Wesentlichen linearen Verfahrweg für die Form realisiert und bei der wenigstens zwei Fluidzylinder als Linearantrieb für die Positionierung der Form entlang des linearen Verfahrweges und wenigstens ein Führungselement als Linearführung sowie eine mit dem Führungselement korrespondierende Verriegelungsvorrichtung verwendet sind.

Die Erfindung betrifft darüber hinaus eine Reifenheizpresse mit einer Form, die zwei relativ zueinander positionierbare Formteile aufweist und die mit einer Einrichtung zum Justieren der Höhe der Form durch Lageänderung wenigstens eines der Formteile versehen ist.

Gemäß dem Stand der Technik erfolgt das Justieren der Höhe der Form einer Reifenheizpresse beispielsweise unter Verwendung einer Spindel, die mit einem Außengewinde in ein Innengewinde einer Mutter eingreift. Eine Reifenheizpresse weist typischerweise einen Rahmen auf und eine Verstellung der Formteile erfolgt in einer vertikalen Richtung.

Gemäß dem Stand der Technik erfolgt die Höhenjustierung häufig unter Verwendung eines elektrischen Antriebes und eines Getriebes. Damit wird gemäß dem Stand der Technik ein rotatorisch arbeitender Antrieb verwendet, der mittels des bekannten Prinzips, dass die Gewindespindel mit einer Gewindemutter realisiert, diese rotatorische Bewegung in eine Linearbewegung überführt. Die Linearbewegung wenigstens eines Formteiles bzw. der Formhälften, welche üblicherweise aus Matrize und Patrize, oder aus einer Matrize und einer Druckscheibe bestehen, ist erforderlich, um die notwendige, von der herzustellenden Reifendimension abhängige lichten Weite und damit der Höhe der Form während des Reifenherstellungsprozesses zu beeinflussen.

Aufgrund der erheblichen Kräfte, die während der Herstellung eines Reifens in den Formteilen entstehen, müssen die Bauteile, insbesondere die eingesetzten Formteile, extreme Gestaltfestigkeit aufweisen. Dies kann in der Regel nur durch eine entsprechend massive Ausgestaltung dieser Formteile, d.h. auch einer Matrize und Druckplatte, realisiert werden. Dadurch erreichen diese Bauteile erhebliches Eigengewicht und Dimensionen.

Die Linearbewegung dieser Bauteile durch Spindel-Mutter-Anordnungen bedarf einer entsprechenden Dimensionierung. Um die erforderlichen Kräfte übertagen zu können, müssen Größe, Gewindeart und vor allem Werkstoffe gewählt werden, die diesen Belastungen standhalten. Die Wahl hochfester Werkstoffe erschwert ganz erheblich die meist spanende Bearbeitung oder rollende Massivumformung und damit die Herstellung des Gewindes auf der Spindel und in der Mutter. Dadurch werden Spindel und Mutter äußerst aufwändig und teuer.

Weiterhin ist problematisch, dass das Maschinenelement Mutter-Spindelelement insbesondere in den linearen Endpositionen aufgrund der dann maximalen ungeführten Spindellänge sehr knickungsanfällig ist. Dies reduziert die Eigenschaft zur Aufnahme von Linearkräften, die längs der Spindelachse aufgenommen werden müssen.

Auch die Verwendung von Spindel und Mutter innerhalb der Reifenheizpresse ist nicht unkompliziert. Eine Gewindespindel und eine Mutter sind häufig schwierig zu montieren und zu warten. Darüber hinaus ist eine kontinuierliche Schmierung erforderlich.

Ein zusätzliches Problem ist, dass das antriebsleistungserzeugende Aggregat, d.h. der üblicherweise elektrisch-rotatorische Antrieb, für die Spindel-Mutter-Anordnung direkt innerhalb der Reifenheizpresse angeordnet sein muss. Ist die Weiteneinstellung der Formhälften, wie bei Säulenheizpressen häufig realisiert, über die obere Formhälfte vorgesehen, dann müssen die räumlichen Verhältnisse berücksichtigt und bei jeder Auf-Zu-Bewegung der oberen Formhälfte muss auch der rotatorische Antrieb bewegt werden.

Aus der WO 2010146554 A1 ist bereits eine Vorrichtung zur Justierung der Höhe einer Form einer Reifenheizpresse bekannt. Zur Verstellung werden Fluidzylinder als Linearantrieb verwendet. Darüber hinaus ist ein Führungselement und eine Verriegelungsvorrichtung vorgesehen.

Weitere Reifenheizpressen werden in der JP H11114965 A sowie der JP S6248514 A beschrieben.

Eine weitere Reifenheizpresse mit einer Formhöhenjustierung und der Verwendung von Fluidzylindern wird in der DE 19817822 A1 erläutert.

Es ist Aufgabe der Erfindung, ein Verfahren sowie eine geeignete Vorrichtung zu schaffen, die eine zuverlässige, technisch robuste und kostengünstige Justierung der Höhe der Form einer Reifenheizpresse unterstützt.

Diese Aufgabe wird erfindungsgemäß hinsichtlich der Vorrichtung durch die Merkmalskombination von Patentanspruch Nr. 1 gelöst.

Die Aufgabe wird hinsichtlich des Verfahrens erfindungsgemäß durch die Merkmalskombination von Patentanspruch Nr. 14 gelöst.

Um die Justierung der Höhe der Form innerhalb der Reifenheizpresse aufgabengemäß zu realisieren, wird die Höhe wenigstens einer Formhälfte durch wenigstens zwei Hydraulikzylinder bewerkstelligt. Durch diese fluidisch arbeitenden Zylinder ist es möglich, die antriebsleistungserzeugenden Aggregate, welche durch druck- und volumenstromerzeugende Flüssigkeitspumpen gebildet sind, außerhalb der Reifenheizpresse anzuordnen. Der Energieeintrag erfolgt durch den druckbeaufschlagten Flüssigkeitsvolumenstrom in bekannter Weise dadurch, dass die durch Zuleitungen in die Fluidzylinder eingebracht wird.

Die Erfindung kombiniert die Fluidzylinder zur Justierung der Höhe der Form einer Reifenheizpresse mit wenigstens einem Führungselement. Fluidzylinder sind generell nur geeignet, vergleichsweise geringe Seitenkräfte, d.h. Radialkräfte aufzunehmen. In einer Reifenheizpresse können Radialkräfte in erheblichem Umfang auftreten. Aus diesem Grund sieht die Erfindung wenigstens ein Führungselement vor, das vorzugsweise zentrisch zu der höhenverstellbaren Formhälfte und/oder zentrisch zu der Fluidzylinder-Anordnung angebracht ist. Mit der Verwendung des wenigstens einen Führungselementes werden die Radialkräfte nicht in die Fluidzylinder eingeleitet und Schäden, zum Beispiel, Undichtigkeiten werden verhindert.

Die Erfindung erkennt weiterhin, dass das Führungselement besonders vorteilhaft für eine kombinierte, integrale Funktion zur Verfügung steht. Neben der Führungsfunktion durch die konzentrische, linear bewegliche Ausgestaltung wird das Führungselement mit wenigstens einer Verriegelungsvorrichtung ausgestattet.

Diese wenigstens eine Verriegelungsvorrichtung ermöglicht eine Festlegung des gesamten Bauelementes bestehend aus im Wesentlichen den Fluidzylindern, der Formhälfte und des an der Formhälfte festgelegten Führungselementes in axial-linearer Bewegungsrichtung. Dadurch wird erreicht, dass nachdem die Fluidzylinder die Formhälfte in die gewünschte Höhenlage justiert haben und die Verriegelungsvorrichtung aktiviert worden ist, die Fluidzylinder drucklos geschaltet werden können.

Das bedeutet, dass die während des Reifenherstellungsvorganges innerhalb der Presse wirkenden linearen Kräfte in axialer Richtung nicht von den Fluidzylindern, sondern von dem Führungselement aufgenommen werden. Es ist erfindungsgemäß möglich, dass längs des Führungselementes mehr als eine Verriegelungsvorrichtung vorgesehen wird. Dadurch ist es möglich, dass die Festlegung in axial-linearer Bewegungsrichtung in mehreren Positionen erfolgen kann. Dies unterstützt eine fein abgestufte Lagepositionierung.

Das Führungselement wird in einer bevorzugten Ausgestaltung in rotationssymmetrischer Form ausgebildet, vorzugsweise als Hohlkörper in Form eines Rohrs. Es sind alle Formen denkbar, die die Führungsfunktion unterstützen und es ermöglichen, dass eine Verriegelungsvorrichtung vorgesehen werden kann.

Die Erfindung erkennt weiterhin, dass das Führungselement besonders vorteilhaft für eine weitere, integrale Funktion zur Verfügung steht. Neben der Führungsfunktion durch die konzentrische, linear bewegliche Ausgestaltung und die wenigstens einer Verriegelungsvorrichtung wird das Führungselement bevorzugt als Hohlkörper, insbesondere als Rohr ausgestaltet.

In Übereinstimmung mit dem allgemeinen Fachwissen wird ein Rohr als Hohlkörper mit praktisch beliebigem Querschnitt definiert. Dadurch ist es möglich, dass mittig durch das Führungselement hindurch ein Gestänge geführt werden kann, an dem endseitig ein Haltewerkzeug für den Reifenrohling festgelegt ist. Der Reifenrohling muss vor und während des Heiz- und Herstellungsvorganges innerhalb der Formhälften sowohl in deren Offen- als auch Geschlossen-Stellung in Position gehalten werden. Das bedeutet, dass die Erfindung ein Führungselement mit einer dreifachintegralen Funktion realisiert.

In einer Ausgestaltungsvariante der Erfindung kann das Hydrauliksystem als Ölhydraulik konzipiert sein. Eine andere Möglichkeit, die Erfindung umzusetzen, besteht in der Verwendung einer Wasserhydraulik, Reifenheizpressen arbeiten innerhalb der Formhälften mit erheblich hohen Temperaturen von bis zu 150 Grad Celsius, häufig auch bis zu 180 Grad Celsius um den erforderlichen Vulkanisierungsprozess durchführen zu können. Das bedeutet für die Einrichtung zur Justierung der Höhe, dass sie in einem Umfeld mit erhöhter Wärmebelastung eingesetzt wird. Es besteht erhebliche Feuergefahr, wenn aufgrund eines Defektes oder eine Undichtigkeit herkömmliches Hydrauliköl austritt und sich an den heißen Bauteilen entzündet. Da die Lösung durch unbrennbares Hydrauliköl teuer und umweltschädlich ist, bietet sich eine Wasserhydraulik an.

Um eine exakte Höhenpositionierung der zu verfahrenden Formhälfte zu unterstützen, sieht die erfindungsgemäße Lehre doppeltwirkende Fluidzylinder vor, d.h. Zylinder die sowohl kontrolliert aus- als auch eingefahren werden können. Dadurch kann eine verfahrwegabhängige Höhenpositionierung ohne Endlagenanschläge nur durch die gesteuerte Zuführung des Fluids realisiert werden. Weiterhin ist es möglich, durch entsprechende Proportionalventilregeltechnik die Schwingungsneigung des Fluidsystems zu reduzieren.

Es ist erforderlich, den uneingeschränkten Wärmeeintrag über die höhenverstellbare Formhälfte in die Fluidzylinder zu begrenzen, da die Betriebstemperaturen üblicherweise einsetzbarer Zylinder in einem Bereich von bis zu 60 Grad Celsius liegen, die Formhälfte jedoch Temperaturen von bis zu 180 Grad Celsius während des Pressenbetriebs aufweisen kann. Aus diesem Grund werden die wenigstens zwei Fluidzylinder zur Justierung der Höhe der Form nicht direkt mit ihren Zylinderstangen an der Formhälfte, die in einer bevorzugten Ausführungsform durch eine Druckplatte gebildet ist, festgelegt werden, sondern die Verbindung wird über eine temperaturisolierende Platte hergestellt, die verhindert, dass der Wärmeeintrag über die Zylinderstangen in die Zylinder die Grenzwerte in unzulässiger Weise überschreitet. Aufgrund der erforderlichen hohen Druckfestigkeit kommen insbesondere keramikbasierende Kompositwerkstoffe in Betracht.

Weiterhin können diese temperaturisolierenden Platten die Verbindung zwischen den Zylinderstangen und der Formhälfte derart realisieren, dass eine begrenzte radiale Relativbewegung zwischen den Zylinderstangenanlagepunkt und der Formhälfte unterstützt wird. Diese Radialbewegung verhindert ein Verspannen der Bauteile zueinander als Folge von toleranzbedingten, ungleichmäßigen Zylinderbewegungen, Fertigungstoleranzen und vor allem unterschiedliche Materialausdehnungen infolge der vorliegenden Temperaturgradienten innerhalb der Reifenheizpresse.

Auch die Festlegung des Führungselementes an der Formhälfte erfolgt wie bei den Fluidzylindern wegen der erheblichen Temperaturentwicklung über ein thermisch isolierendes Element. Zweck der thermischen Entkopplung von Formhälfte und Führungselement ist, dass der Wärmeeintrag in das Führungselement und die angrenzenden Bauteile reduziert werden soll. Ähnlich wie bei den Fluidzylindern ist es auch bei dem Führungselement wichtig, dass die Wärmeeinbringung begrenzt wird. Bei dem Führungselement ist dies deshalb wichtig, weil wegen der Führungsaufgabe des Führungselementes eine sehr präzise Linearführung in axialer Richtung vorgesehen sein muss. Diese Linearführung kann durch verschiedene bekannte Maschinenelemente realisiert werden. Gleitpassungen, Buchsen oder Wälzlager sind geeignete Realisierungsmöglichkeiten. Alle sinnvollen Ausgestaltungen dieser Linearführung sind jedoch empfindlich auf Materialausdehnungen infolge Temperaturerhöhung. Aus diesem Grund muss der Wärmeeintrag in das Führungselement begrenzt werden.

Dieses thermisch isolierende Element zwischen Formhälfte und Führungselement kann als Platte, oder angepasst an die Querschnittsform des Führungselementes, zum Beispiel als Ring ausgestaltet sein. Im Unterschied zu den isolierenden Elementen zwischen Formhälfte und Fluidzylindern wird eine radiale Beweglichkeit nicht realisiert. Dies würde der axialen Führungsaufgabe des Führungselementes zuwiderlaufen. Das Führungselement soll die radialen Kräfte aufnehmen, die durch die Formhälfte möglicherweise auf die Fluidzylinder übertragen werden könnten. Aus diesem Grund muss sowohl in radialer als auch in axialer Richtung zwischen dem Führungselement und der Formhälfte eine kraft- und/oder formschlüssige Verbindung vorgesehen sein.

Grundsätzlich kann die Justierung der Höhe der Form einer Reifenheizpresse durch die axiale Verschiebung der oberen, der unteren oder beider Formhälften realisiert werden. Aus Kostengesichtspunkten ist jedoch empfohlen, die Justierung nur durch die axiale Verschiebung einer Formhälfte zu bewerkstelligen. Infolge der Tatsache, dass die obere Formhälfte häufig zum Zweck des Be- und Endladens der Presse Auf- und Zugefahren werden muss, bietet es sich an, die Vorrichtung zur Justierung derart zu platzieren, dass die untere Formhälfte justiert werden kann. In diesem Fall ist es besonders vorteilhaft, dass das Maschinenbett der Reifenheizpresse, dass auch Gestell genannt wird, als Aufnahme der wenigstens zwei Fluidzylinder und/oder zur Aufnahme des Führungselementes ausgebildet ist. Auf diese Weise lassen sich Kosten und Bauhöhe der gesamten Reifenheizpresse reduzieren.

Das Maschinenbett wird bevorzugt aus metallischen Werkstoffen oder Gusseisen, zum Beispiel als Schweißkonstruktion, geschraubte Konstruktion oder als Gussbauteil durch spanende Fertigungsverfahren, Schweißen oder bildsames Urformen hergestellt. Um die Fluidzylinder und/oder dass wenigstens eine Führungselement aufnehmen zu können, werden in dem Maschinenbett Aussparungen vorgesehen, in die diese Bauteile eingelassen und festgelegt werden können. Neben der Verringerung der Gesamtbauhöhe der Reifenheizpresse durch die Aufnahme der Fluidzylinder und/oder des wenigstens eine Führungselementes in dem Gestell können zusätzliche Montagemittel, die zur Abstützung und als Widerlager dienen, eingespart werden. Dies unterstützt eine einfache und kostengünstige Konstruktion.

In den Zeichnungen sind Ausführungsbeispiele der Erfindung schematisch dargestellt. Es zeigen:
- Fig. 1: In einer perspektivischen Darstellung die erfindungsgemäße Justiervorrichtung (200) der Höhe einer Form einer Reifenheizpresse (100) am Beispiel von zwei nebeneinander angeordneten Säulenheizpressen, wobei die linke Reifenheizpresse in der geöffneten-Stellung und die rechte Reifenheizpresse in der geschlossenen-Stellung dargestellt ist,
- Fig. 2: zeigt eine perspektivische Vorderansicht des Maschinenbettes bzw. des Maschinengestells (10) der Reifenheizpresse (100),
- Fig. 3: zeigt eine perspektivische Vorderansicht des Maschinenbettes bzw. des Maschinengestells (10) der Reifenheizpresse (100) und montierten Fluidzylindern (1), wobei die Kolbenstangen (2) der Fluidzylinder in der eingefahrenen Endlagenposition dargestellt sind,
- Fig. 4: zeigt eine perspektivische Vorderansicht des Maschinenbettes bzw. des Maschinengestells (10) der Reifenheizpresse (100) und der montierten Fluidzylinder (1), wobei die Kolbenstangen (2) der Fluidzylinder (1) in einer ausgefahrenen Position dargestellt sind,
- Fig. 5: zeigt eine perspektivische Vorderansicht des Maschinenbettes bzw. des Maschinengestells (10) der Reifenheizpresse (100) und der montierten Fluidzylinder (1), wobei die Kolbenstangen (2) der Fluidzylinder in einer von der eingefahrenen Position abweichenden Stellung illustriert sind und der darauf festgelegten ersten Formhälfte, hier dargestellt als Druckplatte (20),
- Fig. 6: zeigt eine perspektivische Vorderansicht der Justiervorrichtung (200), dargestellt sind das Maschinenbett bzw. Maschinengestell (10) der Reifenheizpresse (100), und montierten Fluidzylindern (1), wobei die Kolbenstangen (2) der Fluidzylinder in einer von der eingefahrenen Position abweichenden Stellung illustriert sind und kolbenstangenendseitig Verbindungsmittel (3) aufweisen. Weiterhin zeigt Fig. 6 ein in die Strukturöffnung (12) eingelassenes Führungselement (30), das mit einer Verriegelungsvorrichtung (50) mit wenigstens einer Längs- und Quernut (41) versehen ist,
- Fig. 7: zeigt eine perspektivische Draufsicht des Maschinenbettes bzw. des Maschinengestells (10) der Reifenheizpresse (100) und von montierten Fluidzylindern (1), wobei die Kolbenstangen (2) der Fluidzylinder (1) in

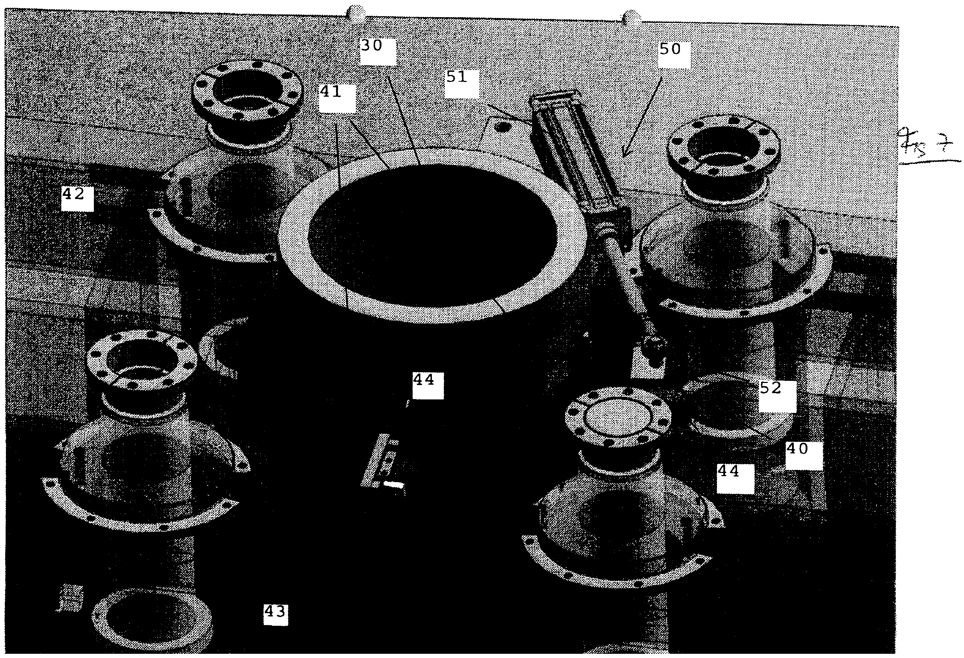

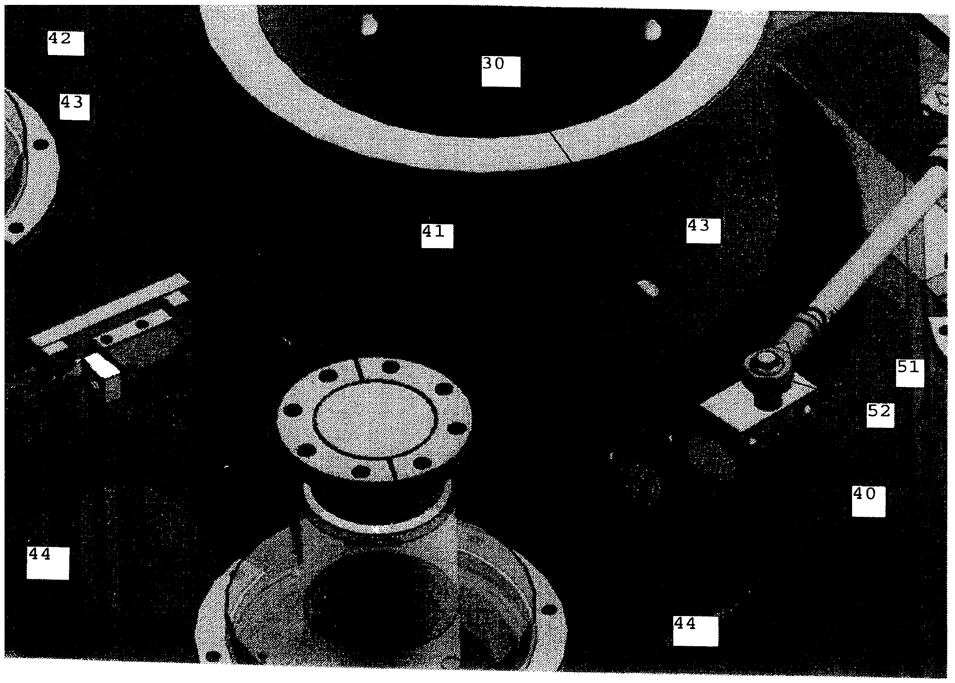

- Fig. 8: einer von der eingefahrenen Position abweichenden Stellung illustriert sind und kolbenstangenendseitig Verbindungsmittel (3) aufweisen. Weiterhin zeigt Fig. 7 ein in die Strukturöffnung (12) eingelassenes Führungselement (30) mit wenigstens einer Verriegelungsvorrichtung (40) und Schwenkantrieb (50), zeigt einen Ausschnitt der perspektivischen Draufsicht des Maschinenbettes bzw. des Maschinengestells (10) der Reifenheizpresse (100) von Fig. 7, insbesondere ein in die Strukturöffnung (12) eingelassenes Führungselement (30) mit wenigstens einer Verriegelungsvorrichtung (40) und Schwenkantrieb (50),

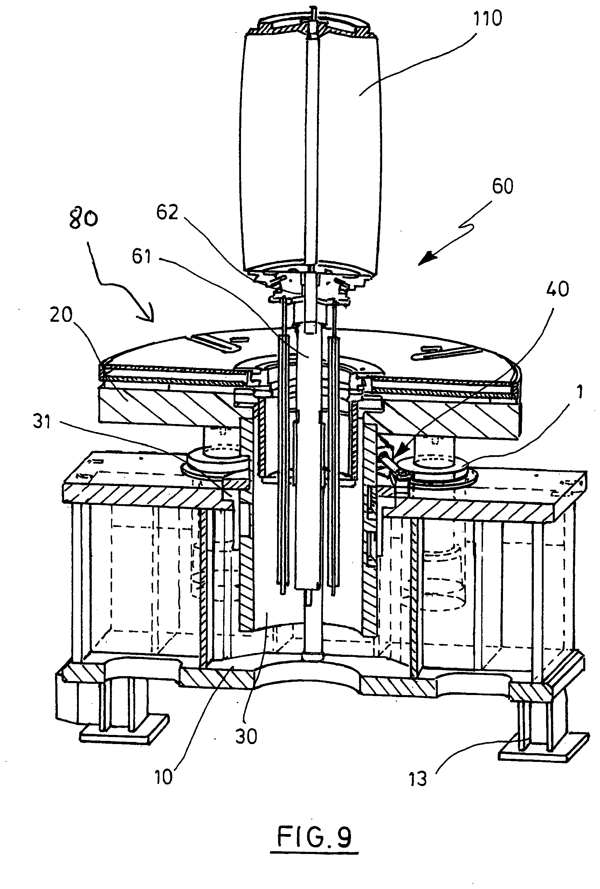

- Fig. 9: zeigt eine perspektivische Vorderansicht in einer Schnittdarstellung, umfassend den unteren Teil einer Reifenheizpresse (100) aufweisend das Maschinenbett bzw. das Maschinengestell (10) und montierte Fluidzylinder (1), sowie ein in die Strukturöffnung (12) eingelassenes Führungselement (30) und des darauf festgelegten ersten Formteils, hier dargestellt als Druckplatte (20). Zentrisch durch das rohrförmig ausgebildete Führungselement (30) und die Öffnung (21) der Druckplatte (20) ist das Gestänge (61) geführt, das zusammen mit dem Haltewerkzeug (62) die Haltevorrichtung (60) für den Reifenrohling (110) bildet,
- Fig. 10: zeigt die in Fig. 5 dargestellten Bauelemente in einer perspektivischen Seitenansicht ohne die Füße (13) des Maschinenbettes (10),
- Fig. 11: zeigt die in Fig. 6 und 7 dargestellten Bauelemente in einer perspektivischen Seitenansicht ohne die Füße (13) des Maschinenbettes (10),
- Fig. 12: zeigt im unteren Abbildungsbereich die Draufsicht auf die Reifenheizpresse (100), dargestellt sind die Druckplatte (20) und die mittig zur Druckplatte (20) angeordnete Öffnung (21) mit Führungselement (30). Im oberen Abbildungsbereich ist der Schnitt C-C der Draufsicht dargestellt,
- Fig. 13: zeigt die Vorderansicht der Reifenheizpresse (100) im unteren Pressenbereich mit Gestell (10) und Druckplatte (20) sowie Fluidzylindern (1) und Führungselement (30).

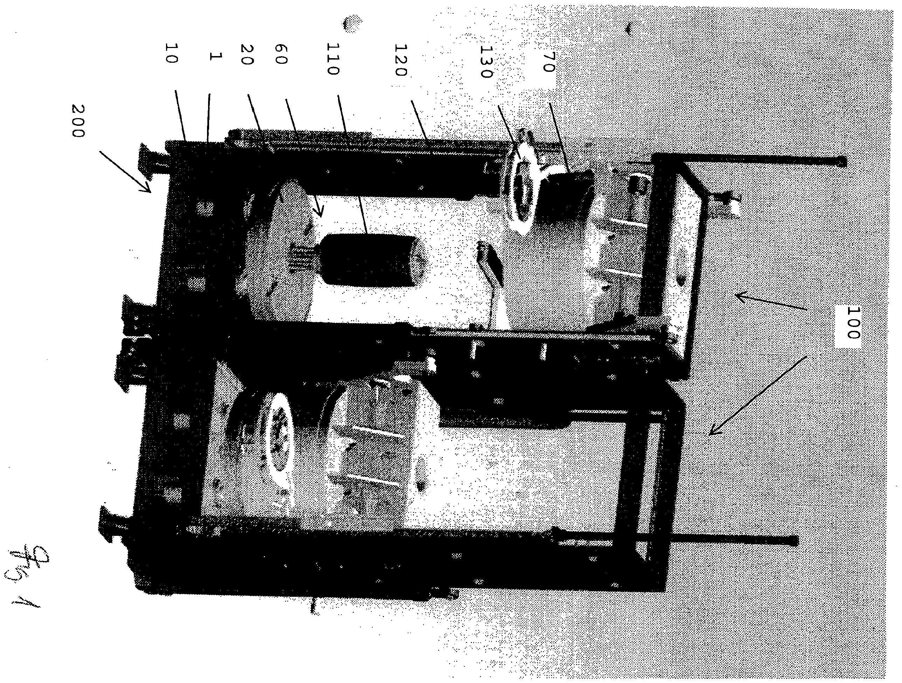

Figur 1 zeigt in einer perspektivischen Darstellung die erfindungsgemäße Justierung der Höhe einer Form einer Reifenheizpresse (100) am Beispiel von zwei nebeneinander angeordneten Säulenheizpressen, wobei die linke Reifenheizpresse in der geöffneten-Stellung und die rechte Reifenheizpresse in der geschlossenen-Stellung dargestellt ist, wobei die obere Formhälfte als zweites Formteil (70) in der rechten geschlossenen-Stellung einen Ausschnitt aufweist, um die Situation innerhalb der Formteile (80, 70) illustrieren zu können.

Basis der Reifenheizpresse (100) ist das Maschinenbett (10) als tragendes Element für den darüber liegenden Pressenaufbau, aufweisend Säulen (120) mit integrierter oder daran festgelegter Bewegungsmechanik für die Auf- und Zufahrbewegung der oberen Formhälfte (70). Die untere Formhälfte (80), hier dargestellt als Druckplatte (20), ist direkt über dem Gestell (10) angeordnet und über Fluidzylinder (1) linear in Längsrichtung der Reifenheizpresse (100) bewegbar.

Mittig aus der Druckplatte (20) ragt eine Haltevorrichtung (60), aufweisend ein Gestänge (61) und ein Haltewerkzeug (62) zur Positionierung des Reifenrohlings (110) innerhalb der Formteile (80, 70).

In einer besonders bevorzugten Ausführung sind die Bewegungsmechanik für das Auf- und Zufahren der oberen Formhälfte (70) und die für die Linearbewegung der unteren Formhälfte als erstes Formteil (80) vorgesehenen Zylinder (1) als fluidisch arbeitende Elemente ausgestaltet. Vorteilhaft bei der Verwendung von Fluidzylindern (1) für die Druckplatten-Linearbewegung und Fluidzylindern für die Bewegungsmechanik ist, dass ein gemeinsames Leistungsaggregat vorgesehen werden kann. Dieses Leistungsaggregat wird üblicherweise durch eine ausreichend dimensionierte Hydraulikpumpe abgebildet Vorzugsweise ist die Hydraulikpumpe in abgegebener Leistung und Volumenstrom einstellbar.

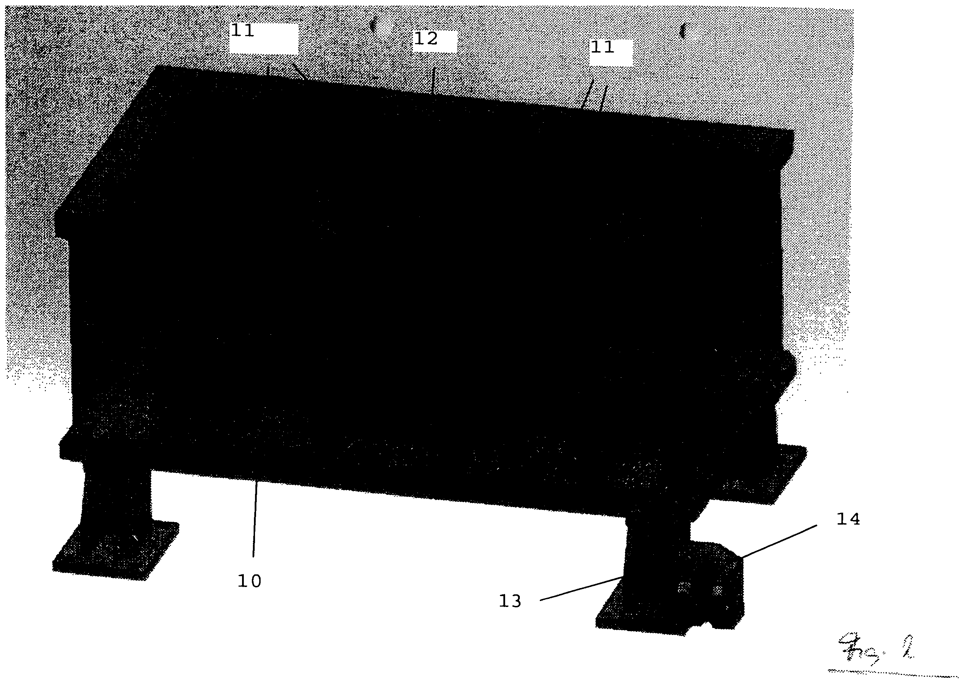

Figur 2 zeigt eine perspektivische Vorderansicht des Maschinenbettes bzw. des Maschinengestells (10) der Reifenheizpresse (100) mit doppeltwirkenden Fluidzylindern (1). Ein Maschinenbett (10), auch Gestell genannt, ist als Basiselement der Reifenheizpresse (100) eingesetzt und mit Strukturöffnungen (11,12) ausgestattet, die zur Aufnahme der Fluidzylinder (1) und des wenigstens einen Führungselementes (30) dienen. Hierdurch lässt sich die Gesamthöhe der erfindungsgemäßen Reifenheizpresse (100) verringern.

Das Maschinenbett wird bevorzugt aus metallischen Werkstoffen oder Gusseisen hergestellt. Figur 2 zeigt eine Ausführung als sogenannte gebaute Konstruktion, d.h. es werden Halbzeuge wie Platten, Flachstähle und Profile entsprechend der zu erreichenden Abmessungen des Gestells (10) vorkonfektioniert und anschließend durch Verschraubungen, Vernietungen, Verschweißung oder dergleichen gefügt. Die erfindungsgemäße Gesamtkonstruktion ist bewusst so ausgeführt, dass praktisch jede Gestell-Herstellungsvariante ermöglicht wird.

Es sind Füße (13) vorgesehen, die zur Aufstellung und Festlegung an einem geeigneten Untergrund vorgesehen sind. Die zuverlässige Festlegung des Maschinenbettes (10) und damit der gesamten Reifenheizpresse (100) mittels geeigneter Befestigungselemente ist wichtig. Die Reifenheizpresse (100) verursacht im Betrieb erhebliche Erschütterungen, es treten Querkräfte und Drehmomente auf, die von der Reifenheizpresse (100) auf die Umgebung übertragen werden. Dazu sind im vorliegenden Beispiel Füße (13) vorgesehen. Es ist ebenfalls möglich, das Gestell (10) direkt mit dem Untergrund zu verbinden. In einer weiteren Ausgestaltungsvariante sind die Füße (13) mit zusätzlichen Befestigungselementen (14) versehen, um mit einem weiteren Maschinenbett (10) verbunden werden zu können.

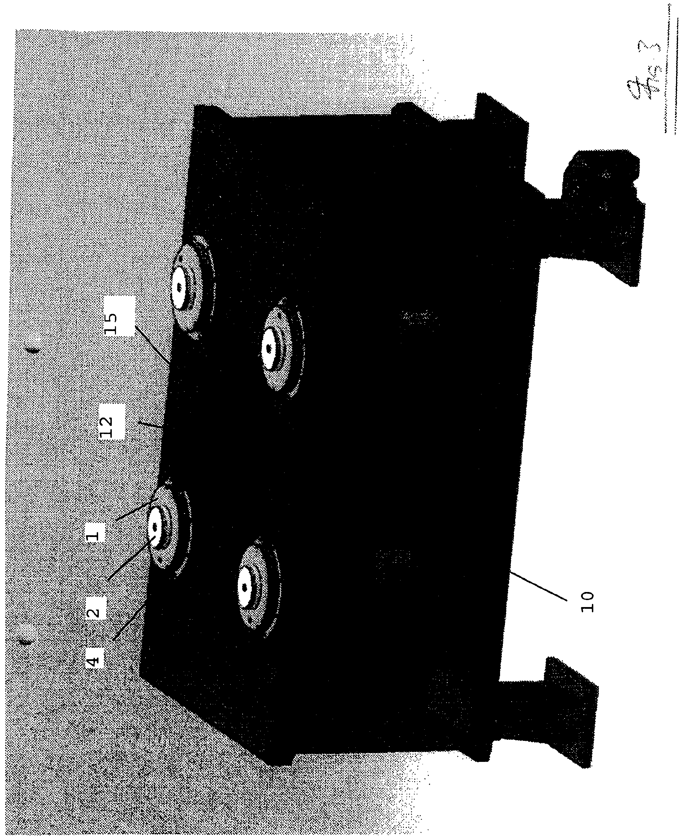

Figur 3 zeigt eine perspektivische Vorderansicht des Maschinenbettes bzw. Maschinengestells (10) der Reifenheizpresse (100) und von montierten Fluidzylindern (1), wobei die Kolbenstangen (2) der Fluidzylinder in der eingefahrenen Endlagenposition dargestellt sind. In dieser Ausgestaltung sind die Fluidzylinder (1) über die weit gehend plane Oberfläche des Maschinenbettes (10) hervorstehend. Sollte die Bauhöhe der Reifenheizpresse (100) weiter reduziert werden, können auch Montagesituationen der Fluidzylinder (1) gewählt werden, die im eingefahrenen Kolbenzustand planparallel zur Oberfläche des Gestells (10) festgelegt sind. Es sind Verbindungsmittel (4) vorgesehen, welche die Fluidzylinder (1) in den Strukturöffnungen (11) des Maschinenbettes (10) festlegen. Die Strukturöffnung (12) dient zur Aufnahme des Führungselementes (30) und kann zusätzlich eine konzentrische Ausnehmung (15) aufweisen.

Wird zur Führung des Führungselementes (30) in dem Maschinenbett (10) eine Buchse (31) gewählt, dient die konzentrische Ausnehmung (15) als Aufnahmeraum für den Bund der Buchse (31). In dieser Darstellung werden doppeltwirkende Fluidzylinder (1) verwendet. Typischerweise ist jeder der Zylinder dafür geeignet, eine Kraft von 125 Tonnen zu generieren. Die Reifenheizpresse (100) ist somit dafür geeignet, eine Schließkraft von mehr als 500 Tonnen zu entwickeln.

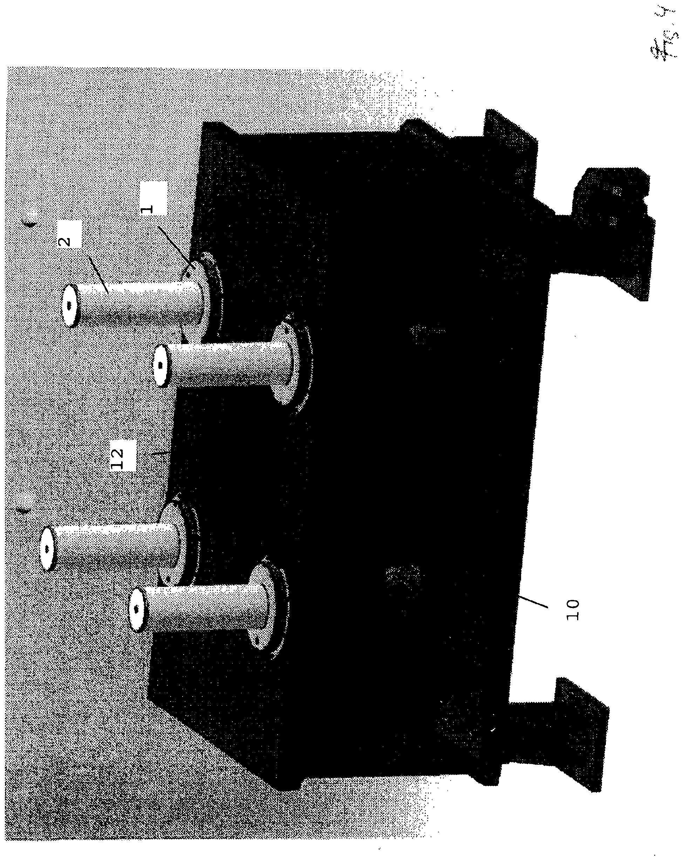

Figur 4 zeigt eine perspektivische Vorderansicht des Maschinenbettes bzw. des Maschinengestells (10) der Reifenheizpresse (100) und von montierten Fluidzylindern (1), wobei die Kolbenstangen (2) der Fluidzylinder (1) in einer ausgefahrenen Position dargestellt sind. Eine typische Ausfahrhöhe beträgt 420 Millimeter. Die Auslegung erfolgt für eine Mindesthöhe der Formteile (80, 70) von 250 Millimeter sowie für eine größte Höhe der Formteile (80, 70) von 660 Millimeter. Der Ausfahrweg der Zylinderkolben (2) kann anwendungsabhängig vorgegeben werden.

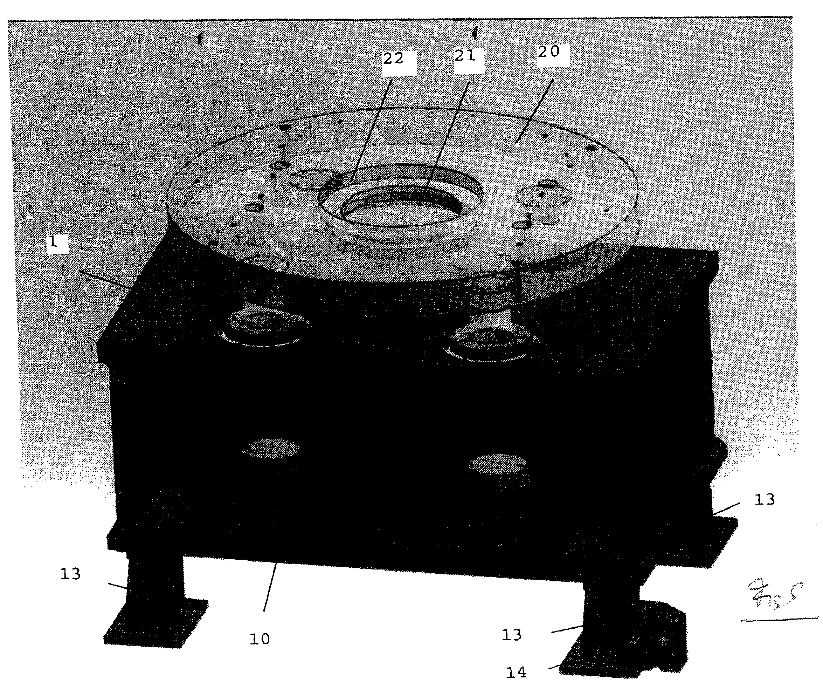

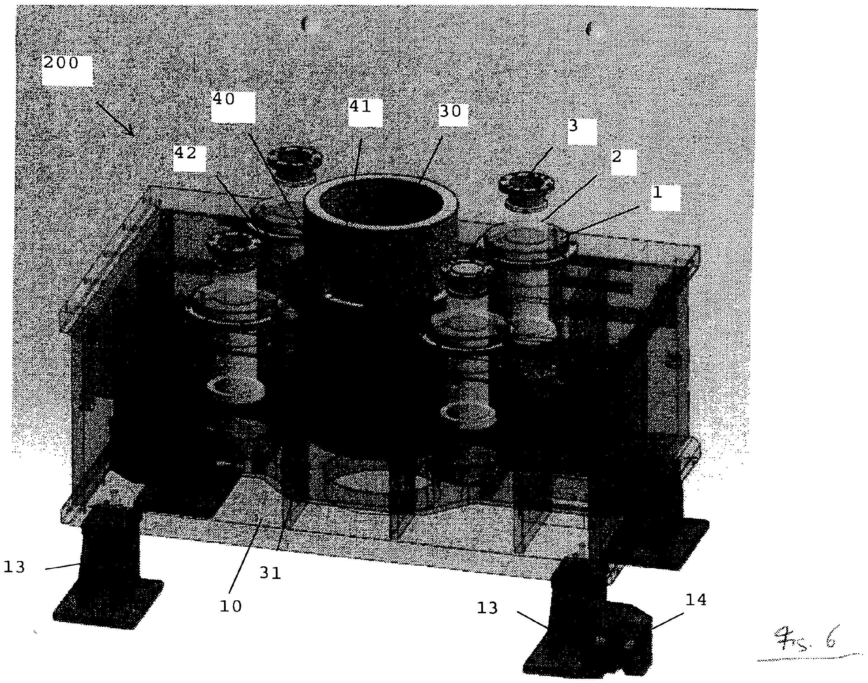

Figur 5 und Figur 6 zeigen eine perspektivische Vorderansicht des Maschinenbettes bzw. des Maschinengestells (10) der Reifenheizpresse (100) und von montierten Fluidzylindern (1), wobei die Kolbenstangen (2) der Fluidzylinder (1) in einer von der eingefahrenen Position abweichenden Stellung illustriert sind und von der darauf festgelegten ersten Formhälfte (nur Figur 5), dargestellt als Druckplatte (20).

Die Druckplatte (20) wird nicht direkt mit den Kolbenstangen (2) der Fluidzylinder (1) gekoppelt. Es sind Verbindungsmittel (3) vorgesehen, die sowohl temperaturisolierende Eigenschaften aufweisen als auch Querbewegungen ermöglichen. Das bedeutet, dass den Verbindungsmitteln (3) die Eigenschaften zu eigen sind, radiale Relativbewegung zwischen den Zylinderkolbenstangen (2) und der Druckplatte (20) an deren Kopplungspunkten zu ermöglichen und gleichzeitig den Wärmeübergang zu reduzieren. Die Verbindungsmittel (3) können aus temperaturisolierenden Zwischenplatten gebildet sein.

Vorzugsweise ist ein Gleitkontakt zwischen der Platte und den Zylindern vorgesehen und eine Kopplung erfolgt unter Verwendung von Klammern. Hierdurch lässt sich eine thermische Ausdehnung berücksichtigen und/oder toleranzbedingte Ungleichmäßigkeiten der Abmessungen oder Fluidzylinderbewegungen ausgleichen.

Figur 6 zeigt eine perspektivische Vorderansicht des Maschinenbettes bzw. des Maschinengestells (10) der Reifenheizpresse (100) und von montierten Fluidzylindern (1), wobei die Kolbenstangen (2) der Fluidzylinder in einer von der eingefahrenen Position abweichenden Stellung illustriert sind und kolbenstangenendseitig Verbindungsmittel (3) aufweisen. Weiterhin zeigt Fig. 6 ein in die Strukturöffnung (12) eingelassenes Führungselement (30), das mit einer Verriegelungsvorrichtung (50) mit wenigstens einer Längs- und Quernut (41) versehen ist. Das Führungselement (30) ist rohrförmig ausgebildet und vereint drei integrale Funktionen: Aufnahme der linearen Kräfte in axialer Richtung der Reifenheizpresse (100); Aufnahme der radialen Kräfte der unteren Formhälfte (80) und Durchführung der Haltevorrichtung (60) durch die Druckplatte (20) in den Presseraum, der durch die beiden Formteile (80,70) gebildet ist.

Die Aufnahme der linearen Kräfte in axialer Richtung der Reifenheizpresse (100) durch das Führungselement (30) wird dadurch unterstützt, dass an dem Führungselemente (30) eine Verriegelungsvorrichtung (40) vorgesehen ist. Die Verriegelungsvorrichtung (40) ist dem Grunde nach eine lösbare Arretierung, welche das Führungselement (30) in einer definierten, axialen Positionen festgelegt. Nachdem die Fluidzylinder (1) die Formhälfte (80) in die gewünschte Höhenlage justiert haben und die Verriegelungsvorrichtung (40) aktiviert worden ist, können die Fluidzylinder (1) drucklos geschaltet werden. Das bedeutet, dass die während des Reifenherstellungsvorganges innerhalb der Reifenheizpresse (100) wirkenden linearen Kräfte in axialer Pressenrichtung nicht von den Fluidzylindern (1), sondern von dem Führungselement (30) aufgenommen werden.

Es ist erfindungsgemäß möglich, dass längs des Führungselementes (30) mehr als eine Verriegelungsvorrichtung (40) vorgesehen wird. Dadurch ist es möglich, dass die Festlegung in axial-linearer Bewegungsrichtung in mehreren Positionen erfolgen kann. Dies unterstützt eine fein abgestufte Lagepositionierung.

Die bevorzugte Ausführungsform der Verriegelungsvorrichtung (40) ist in Figur 6 dargestellt. Es handelt sich um einen Bajonettverschluss, der durch das Zusammenwirken von wenigstens einer Längs- und Quernut (41) auf der äußeren Zylinderfläche des Führungselementes (30) und eines Ringes (42) mit wenigstens einem Zapfen (43) gebildet ist. Nachdem das Führungselement (30) in seine axiale Positionierung und fluchtend mit seiner wenigstens einen Quernut (41) zu dem wenigstens einen Zapfen (43) Verfahren wurde, wird der Ring (42) und damit auch der wenigstens eine Zapfen (43) durch einen Schwenkantrieb (50) soweit verdreht, dass der wenigstens eine Zapfen (43) in den Bereich der Längsnut (41) des Führungselementes (30) verfahren wird. Damit ist das Prinzip des Bajonettverschlusses realisiert, das Führungselement (30) wird durch die Verriegelungsvorrichtung (40) axial festgelegt.

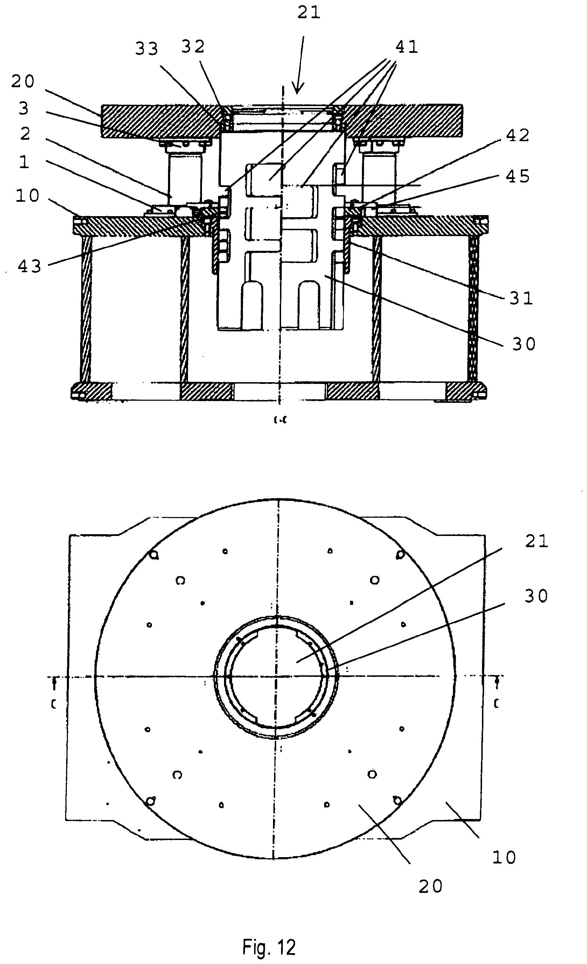

Die zweite integrale Funktion des Führungselementes (30), d.h. die Aufnahme der radialen Kräfte der unteren Formhälfte (20), wird anhand von Figur 9 und 12 erläutert. Die dritte integrale Funktion des Führungselementes (30), d.h. die Durchführung der Haltevorrichtung (60) durch die Druckplatte (20) in den Presseraum, der durch die beiden Formhälften (80,70) gebildet ist, wird anhand von Figur 9 erläutert.

Figur 7 zeigt eine perspektivische Draufsicht des Maschinenbettes bzw. des Maschinengestells (10) der Reifenheizpresse (100) und von montierten Fluidzylindern (1), wobei die Kolbenstangen (2) der Fluidzylinder (1) in einer von der eingefahrenen Position abweichenden Stellung illustriert sind und kolbenstangenendseitig Verbindungsmittel (3) aufweisen. Weiterhin zeigt Figur 7 ein in die Strukturöffnung (12) eingelassenes Führungselement (30) mit wenigstens einer Verriegelungsvorrichtung (40) und einem Schwenkantrieb (50). Der Schwenkantrieb (50) dient zum Verschwenken des Ringes (42) und somit stellt er einen rotatorischen Antrieb für die Verriegelungsvorrichtung (40) dar, welche hier als Bajonettverschluss ausgeführt ist.

Der Ring (42) wird längs eines Kreisbogens verschwenkt, dessen Länge auf die Größenverhältnisse der wenigstens einen Längs- und Quernut (41) und des wenigstens einen Zapfens (43) abgestimmt ist. Der Schwenkzylinder (51) ist durch bewegliche Verbindungsmittel (52) an dem Ring (42) festgelegt. Es werden Sensoren (44) eingesetzt, um die rotatorische Lage des Ringes (42) zu erfassen. Sollte der Ring (42) nicht in der Verschlussposition stehen wird dies an eine ggf. zentrale Steuereinheit gemeldet. Unter dieser Bedingung ist ein Zufahren der Reifenheizpresse (100) nicht möglich.

Figur 8 zeigt einen Ausschnitt der perspektivischen Draufsicht des Maschinenbettes bzw. des Maschinengestells (10) der Reifenheizpresse (100) von Figur 7, insbesondere ein in die Strukturöffnung (12) eingelassenes Führungselement (30) mit wenigstens einer Verriegelungsvorrichtung (40) und einem Schwenkantrieb (50) wie bereits in Figur 7 dargestellt und erläutert.

Figur 9 zeigt eine perspektivische Vorderansicht in einer Schnittdarstellung, umfassend den unteren Teil einer Reifenheizpresse (100) aufweisend das Maschinenbett bzw. des Maschinengestells (10) und montierte Fluidzylinder (1) sowie ein in die Strukturöffnung (12) eingelassenes Führungselement (30). Vorzugsweise wird das Führungselement (30) zentrisch zu den vier Fluidzylindern (1) angeordnet. Unter Verwendung des Führungselementes (30) ist es möglich, die Druckplatte (20) zu zentrieren. Auf dem Führungselement (30) festgelegt und axial positionierbar ist die erste Formhälfte (80), hier dargestellt als Druckplatte (20). Diese Festlegung ist derart realisiert, dass in radialer und axialer Richtung sowohl Kraft- als auch Formschluss vorliegt. Dadurch werden die in die Druckplatte (20) eingeleiteten Radialkräfte von dem Führungselement (30) aufgenommen. Das Führungselement stützt sich über eine Buchse (31) gegen das Maschinenbett (10) ab. Auf diese Weise ist die zweite integrale Funktion des Führungselementes (30), d.h. die Aufnahme der radialen Kräfte der unteren Formhälfte (20), realisiert.

Zentrisch durch das rohrförmig ausgebildete Führungselement (30) und die Öffnung (21) der Druckplatte (20) ist das Gestänge (61) geführt, das zusammen mit dem Haltewerkzeug (62) die Haltevorrichtung (60) für den Reifenrohling (110) bildet. Die Reifenheizpresse kann für die Herstellung von PKW-Reifen oder von LKW-Reifen dimensioniert sein.

Die Funktionsweise der Reifenheizpresse (100) lässt sich anhand der Figuren 9 und 1 wie folgt beschreiben.

Zunächst wird die untere Formhälfte (80) bzw. die Druckplatte (20) durch die erfindungsgemäße Justiervorrichtung (200) in Position gefahren. Die Justiervorrichtung (200) wird im Wesentlichen gebildet durch wenigstens zwei Fluidzylinder (1) zur Positionierung der unteren Formhälfte (80) in Längsrichtung der Reifenheizpresse (100) und wenigstens eines Führungselementes (30). Nachdem die gewünschte Position der Druckplatte (20) erreicht ist, wird eine Verriegelungsvorrichtung (40) aktiviert, sodass die an die Führungsvorrichtung (30) gekoppelte Druckplatte (20) in ihrer Positionierung arretiert ist.

Nachdem die Fluidzylinder (1) die Formhälfte (20) in die gewünschte Höhenlage justiert haben und die Verriegelungsvorrichtung (40) aktiviert worden ist, können die Fluidzylinder (1) drucklos geschaltet werden. Es wird mittels einer Haltevorrichtung (60) der Reifenrohling (110) in Längsrichtung der Reifenheizpresse (100) positioniert.

Unter Verwendung der in die Säulen (120) integrierten Bewegungsmechanik wird die obere Formhälfte (70) in eine Pressposition abgesenkt. Danach wird der Reifenherstellungsprozess durchgeführt, d.h. unter Einwirkung von Hitze und Druck über eine bestimmte Herstellungszeit wird der Reifen hergestellt. Dabei wird der Reifenrohling (110) aus einer Vielzahl von Komponenten wie zwei Wulsten, Gummimischungen, Verstärkungsgeweben und Stahlgürtel gebildet.

Durch die erfindungsgemäße Reifenheizpresse (100) mit Justiervorrichtung (200) werden die Komponenten des Reifenrohlings (110) über einen Zeitraum von 10 bis 30 Minuten und einer Temperatureinwirkung von über 150 Grad Celsius miteinander vulkanisiert. Nach Abschluss des Herstellungsprozesses wird die Reifenheizpresse (100) über die in die Säulen (120) integrierte Bewegungsmechanik durch Verfahren der oberen Formhälfte (70) in eine Geöffnet-Position geöffnet, der fertige Reifen kann über eine Entnahmevorrichtung von der Haltevorrichtung (60) genommen werden.

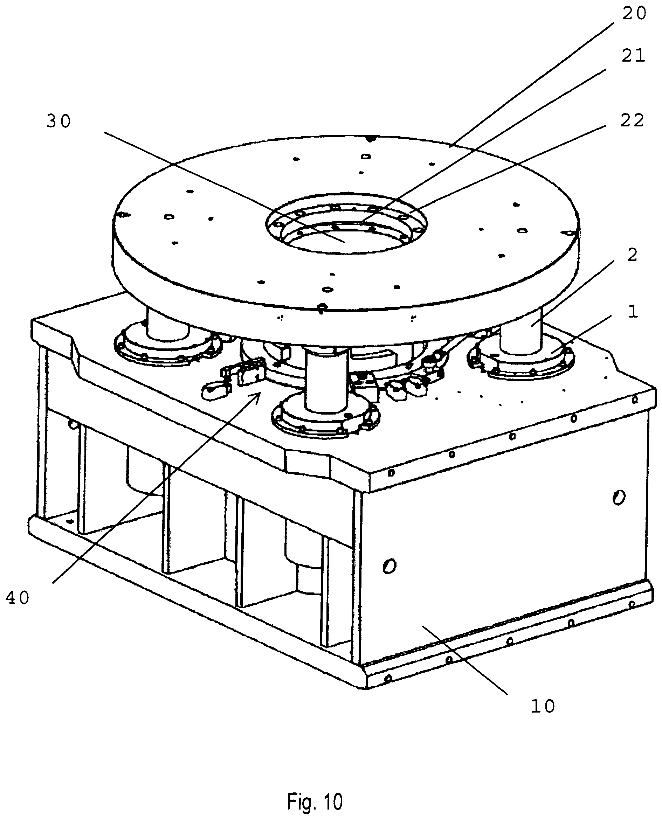

Fig. 10 zeigt die Darstellung der Figur 5 zum Zweck der Verdeutlichung in einer perspektivischen Seitenansicht und ohne die Füße (13) des Maschinenbettes (10). In dieser Darstellung sind die Verbindungsmittel (32) des Führungselementes (30) nicht eingezeichnet, sodass die konzentrische Ausnehmung (22) der Druckplatte (20) sichtbar ist.

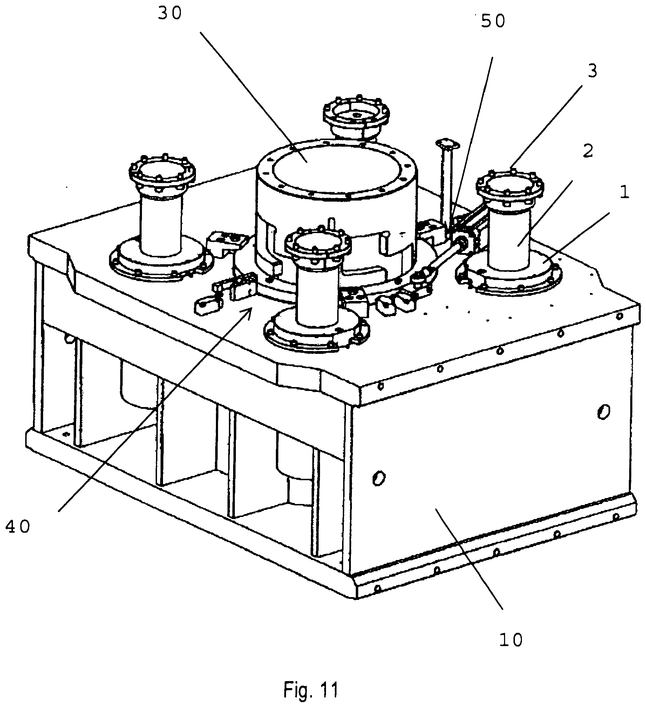

Figur 11 zeigt die Darstellung der Figuren 6 und 7 zum Zweck der Verdeutlichung in einer perspektivischen Seitenansicht und ohne die Füße (13) des Maschinenbettes (10).

Figur 12 zeigt im unteren Abbildungsbereich die Draufsicht auf die Reifenheizpresse (100), dargestellt sind die Druckplatte (20) und die mittig zur Druckplatte (20) angeordnete Öffnung (21) mit Führungselement (30). Im oberen Abbildungsbereich ist der Schnitt C-C der Draufsicht dargestellt. In diese Darstellung sind mehrere, sowohl über dem Umfang der Zylinderfläche als auch in Längsrichtung des Führungselementes (39) angebrachte Längs- und Quernuten (41) zu erkennen. Über die Buchse (31) stützt sich das Führungselement (30) gegen das Maschinenbett (10) ab und es wird gleichzeitig die Verschiebung in axialer Richtung ermöglicht.

Infolge der Zentrierbohrung (33) in der Druckplatte (20) und den Verbindungsmitteln (32) zur Kopplung von Führungselement (30) und Druckplatte (20) ist sowohl die Zentrierung beider Bauteile zueinander als auch die Aufnahme der radialen Kräfte der Druckplatte (20) durch das Führungselement (30) möglich.

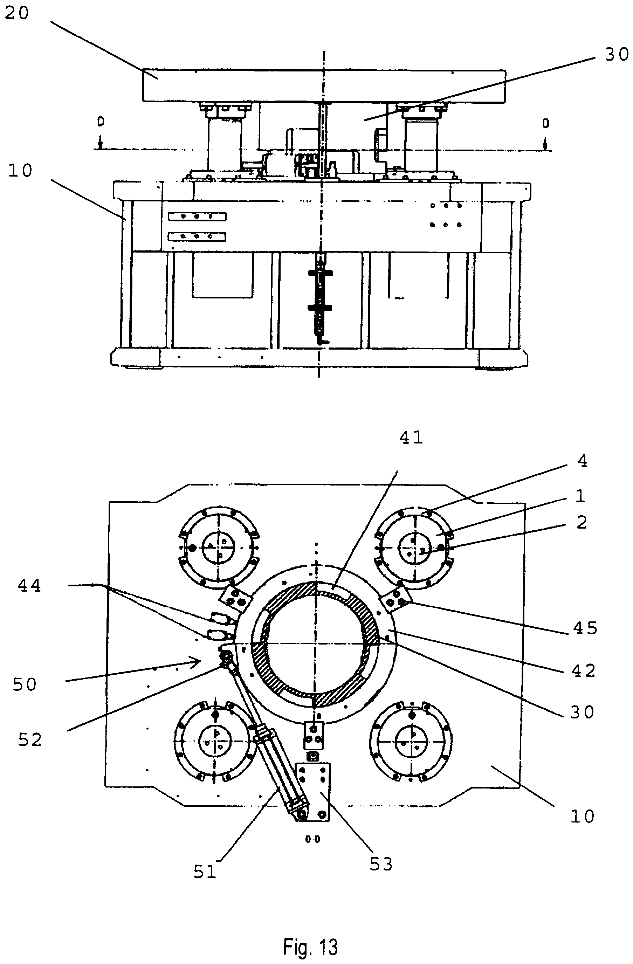

Figur 13 zeigt in der oberen Abbildung die Vorderansicht der Reifenheizpresse (100) im unteren Pressenbereich mit Gestell (10) und Druckplatte (20) sowie Fluidzylindern (1) und Führungselement (30). Die untere Abbildung in Figur 13 beinhaltet den Schnitt D-D der oberen Abbildung.

## Patentansprüche

1. Vorrichtung (200) zur Justierung der Höhe einer Form einer Reifenheizpresse (100), bei der die Form aus mindestens zwei relativ zueinander positionierbaren Formteilen (80, 70) besteht, wobei die Vorrichtung (200) einen linearen Verfahrweg realisiert und bei der wenigstens zwei Fluidzylinder (1) als Linearantrieb für ein unteres Formteil (80) und wenigstens ein Führungselement (30) als Linearführung sowie eine mit dem Führungselement (30) korrespondierende Verriegelungsvorrichtung (40) angeordnet sind sowie bei der das Führungselement (30) rohrförmig ist, **dadurch gekennzeichnet, dass** das Führungselement (30) in wenigstens einer axialen Position festlegbar ist und dass die Verriegelungsvorrichtung (40) im Wesentlichen durch einen Ring (42), aufweisend wenigstens einen Zapfen (43), gebildet ist, der derart relativ zum Führungselement (30) positioniert und orientiert ist, dass der Ring (42) um das Führungselement (30) durch einen Schwenkantrieb (50) wenigstens teilweise drehbar ist, sowie bei der zur Lageüberwachung des Ringes (42) ein Sensor (44) angeordnet ist.

2. Vorrichtung (200) nach Anspruch 1, **dadurch gekennzeichnet, dass** die wenigstens zwei Fluidzylinder (1) Öl- oder Wasserhydraulikzylinder sind.

3. Vorrichtung (200) nach Anspruch 1 oder 2, **dadurch gekennzeichnet, dass** die wenigstens zwei Fluidzylinder (1) doppeltwirkende Fluidzylinder sind.

4. Vorrichtung (200) nach einem der Ansprüche 1 bis 3, **dadurch gekennzeichnet, dass** das Führungselement (30) an seiner Außenfläche wenigstens eine Längs- und Quernut (41) aufweist, welche derart angeordnet ist, dass der wenigstens eine Zapfen (43) des Ringes (42) in die Längs- und Quernut (41) eingreift.

5. Reifenheizpresse (100) aufweisend eine Vorrichtung (200) nach einem der vorgehenden Ansprüche.

6. Reifenheizpresse (100) nach Anspruch 5, **dadurch gekennzeichnet, dass** vier Fluidzylinder (1) als Linearantrieb zur Justierung der Höhe der Form vorgesehen sind.

7. Reifenheizpresse (100) nach Anspruch 6, **dadurch gekennzeichnet, dass** das Führungselement (30) zentrisch zu den Fluidzylindern (1) angeordnet ist.

8. Reifenheizpresse (100) nach Anspruch 5, **dadurch gekennzeichnet, dass** das Führungselement (30) und die Fluidzylinder (1) in Strukturöffnungen (11,12) des Maschinenbettes (10) wenigstens teilweise aufgenommen sind.

9. Reifenheizpresse (100) nach Anspruch 5, **dadurch gekennzeichnet, dass** das untere Formteil (80) durch eine Druckplatte (20) gebildet ist, die zur Justierung der Höhe einer Form von der Vorrichtung (200) bewegbar ist.

10. Reifenheizpresse (100) nach Anspruch 9, **dadurch gekennzeichnet, dass** die Druckplatte (20) eine Öffnung (21) und eine konzentrische Ausnehmung (22) aufweist, sodass das Führungselement (30) durch Verbindungsmittel (32) derart mit der Druckplatte (20) gekoppelt und die Druckplatte (20) relativ zum Führungselement (30) zentriert ist, sodass Längs- und Querkräfte von dem Führungselement (30) aufnehmbar sind.

11. Reifenheizpresse (100) nach Anspruch 10, **dadurch gekennzeichnet, dass** die Druckplatte (20) mit dem Führungselement (30) durch Verbindungsmittel (32) derart gekoppelt ist, dass mittig eine Haltevorrichtung (60) für den Reifenrohling (110) durchführbar ist.

12. Reifenheizpresse (100) nach Anspruch 5 **dadurch gekennzeichnet, dass** die Kolbenstangen (2) der Fluidzylinder (1) durch Verbindungsmittel (4) derart mit der Druckplatte (20) gekoppelt sind, das Längskräfte übertragbar und Querbewegungen ermöglicht sind.

13. Reifenheizpresse (100) nach einem der Ansprüche 10 bis 12, **dadurch gekennzeichnet, dass** die Verbindungsmittel (4, 32) die Wärmeübertragung von der Druckplatte (20) zur Vorrichtung (200) reduzieren.

14. Verfahren zur Justierung der Höhe einer Form einer Reifenheizpresse (100) nach einem der Ansprüche 9 bis 13 aufweisend die Schritte
a) axiale Positionierung der Druckplatte (20) durch die wenigstens zwei Fluidzylinder (1),
b) Aktivierung der Verriegelungsvorrichtung (40) durch eine Schwenkvorrichtung (50), sodass das untere Formteil (80) axial arretiert wird,
c) Überwachung der Arretierung gemäß Schritt b) durch Lageüberwachung des Ringes (42) mittels wenigstens eines Sensors (44),
d) optional können die wenigstens zwei Fluidzylinder (1) drucklos geschaltet werden, wenn die Arretierungsüberwachung gemäß Schritt c) die Arretierung meldet.

15. Verfahren zur Herstellung eines Reifens unter Verwendung einer Reifenheizpresse (100) nach einem der Ansprüche 6 bis 13, aufweisend die Schritte nach Anspruch 14, sowie zusätzlich
e) axiale Lagepositionierung des Reifenrohlings (110) in Längsrichtung der Reifenheizpresse (100) durch die Haltevorrichtung (60),
f) Absenken eines zweiten Formteils (70) in eine Pressposition durch die in die Säulen (120) integrierte Bewegungsmechanik,
g) Reifenherstellungsprozess durch Einwirkung von Zeit, Druck und Temperatur durchführen,
h) Reifenheizpresse (100) über die in die Säulen (120) integrierte Bewegungsmechanik durch Verfahren des zweiten Formteils (70) in eine Geöffnet-Position öffnen,
i) Reifen von einer Entnahmevorrichtung (130) von der Haltevorrichtung (60) entnehmen.

## Claims

1. Apparatus (200) for adjusting the height of a mould of a tyre curing press (100), in the case of which apparatus (200) the mould consists of at least two mould parts (80, 70) which can be positioned relative to one another, the apparatus (200) realizing a linear movement path, and in the case of which apparatus (200) at least two fluid cylinders (1) are arranged as a linear drive for a lower mould part (80), and a guide element (30) is arranged as a linear guide, and at least one locking apparatus (40) which corresponds with the guide element (30) is arranged, and in the case of which apparatus (200) the guide element (30) is tubular, **characterized in that** the guide element (30) can be fixed in at least one axial position, and **in that** the locking apparatus (40) is formed substantially by way of a ring (42), having at least one pin (43), which ring (42) is positioned and oriented relative to the guide element (30) in such a way that the ring (42) can be rotated at least partially around the guide element (30) by way of a pivoting drive (50), and in the case of which apparatus (200) a sensor (44) is arranged for monitoring the position of the ring (42) .

2. Apparatus (200) according to Claim 1, **characterized in that** the at least two fluid cylinders (1) are oil or water hydraulic cylinders.

3. Apparatus (200) according to Claim 1 or 2, **characterized in that** the at least two fluid cylinders (1) are double-acting fluid cylinders.

4. Apparatus (200) according to one of Claims 1 to 3, **characterized in that**, on its outer face, the guide element (30) has at least one longitudinal and transverse groove (41) which is arranged in such a way that the at least one pin (43) of the ring (42) engages into the longitudinal and transverse groove (41).

5. Tyre curing press (100) having an apparatus (200) according to one of the preceding claims.

6. Tyre curing press (100) according to Claim 5, **characterized in that** four fluid cylinders (1) are provided as a linear drive for adjusting the height of the mould.

7. Tyre curing press (100) according to Claim 6, **characterized in that** the guide element (30) is arranged centrally with respect to the fluid cylinders (1).

8. Tyre curing press (100) according to Claim 5, **characterized in that** the guide element (30) and the fluid cylinders (1) are received at least partially in structure openings (11, 12) of the machine bed (10).

9. Tyre curing press (100) according to Claim 5, **characterized in that** the lower mould part (80) is formed by way of a pressure plate (20) which can be moved by the apparatus (200) in order to adjust the height of a mould.

10. Tyre curing press (100) according to Claim 9, **characterized in that** the pressure plate (20) has an opening (21) and a concentric recess (22), with the result that the guide element (30) is coupled by way of connecting means (32) to the pressure plate (20) and the pressure plate (20) is centred relative to the guide element (30), in such a way that longitudinal and transverse forces can be absorbed by the guide element (30) .

11. Tyre curing press (100) according to Claim 10, **characterized in that** the pressure plate (20) is coupled to the guide element (30) by way of connecting means (32) in such a way that a holding apparatus (60) for the green tyre (110) can be guided through centrally.

12. Tyre curing press (100) according to Claim 5, **characterized in that** the piston rods (2) of the fluid cylinders (1) are coupled by way of connecting means (4) to the pressure plate (20) in such a way that longitudinal forces can be transmitted and transverse movements are made possible.

13. Tyre curing press (100) according to one of Claims 10 to 12, **characterized in that** the connecting means (4, 32) reduce the transfer of heat from the pressure plate (20) to the apparatus (200).

14. Method for adjusting the height of a mould of a tyre curing press (100) according to one of Claims 9 to 13 having the following steps:
a) axial positioning of the pressure plate (20) by way of the at least two fluid cylinders (1),
b) activating of the locking apparatus (40) by way of a pivoting apparatus (50), with the result that the lower mould part (80) is locked axially,
c) monitoring of the locking action according to step b) by way of monitoring the position of the ring (42) by means of at least one sensor (44),
d) the at least two fluid cylinders (1) can optionally be depressurized if the locking monitoring means according to step c) reports the locking action.

15. Method for producing a tyre with the use of a tyre curing press (100) according to one of Claims 6 to 13, having the steps according to Claim 14 and, in addition:
e) axial locational positioning of the green tyre (110) in the longitudinal direction of the tyre curing press (100) by way of the holding apparatus (60),
f) lowering of a second mould part (70) into a pressing position by way of the movement mechanism which is integrated into the pillars (120),
g) carrying out of the tyre production process by way of the action of time, pressure and temperature,
h) opening of the tyre curing press (100) via the movement mechanism which is integrated into the columns (120) by way of movement of the second mould part (70) into an open position,
i) removing of tyres from the holding apparatus (60) by a removal apparatus (130).

## Revendications

1. Dispositif (200) d'ajustement de la hauteur d'un moule d'une presse chauffante pour pneumatique (100), dispositif dans lequel le moule comprend au moins deux parties de moule (80, 70) qui peuvent être positionnées l'une par rapport à l'autre, le dispositif (200) effectuant un trajet de déplacement linéaire, et dans lequel sont disposés au moins deux cylindres à fluide (1) servant d'entraînement linéaire destiné à une partie de moule inférieure (80) et au moins un élément de guidage (30) servant de guide linéaire ainsi qu'un dispositif de verrouillage (40) correspondant à l'élément de guidage (30) et dans lequel l'élément de guidage (30) est tubulaire, **caractérisé en ce que** l'élément de guidage (30) peut être fixé dans au moins une position axiale et **en ce que** le dispositif de verrouillage (40) est formé sensiblement par une bague (42) qui comporte au moins une broche (43) qui est positionnée et orientée par rapport à l'élément de guidage (30) de telle sorte que la bague (42) peut tourner au moins partiellement autour de l'élément de guidage (30) par le biais d'un entraînement de pivotement (50), et dans lequel est disposé un capteur (44) destiné à la surveillance de la position de la bague (42).

2. Dispositif (200) selon la revendication 1, **caractérisé en ce que** les au moins deux cylindres à fluide (1) sont des cylindres hydrauliques à huile ou à eau.

3. Dispositif (200) selon la revendication 1 ou 2, **caractérisé en ce que** les au moins deux cylindres à fluide (1) sont des cylindres à fluide à double action.

4. Dispositif (200) selon l'une des revendications 1 à 3, **caractérisé en ce que** l'élément de guidage (30) comporte sur sa surface extérieure au moins une rainure longitudinale et transversale (41) qui est disposée de telle sorte que l'au moins une broche (43) de la bague (42) s'engage dans la rainure longitudinale et transversale (41).

5. Presse chauffante pour pneumatique (100) comprenant un dispositif (200) selon l'une quelconque des revendications précédentes.

6. Presse chauffante pour pneumatique (100) selon la revendication 5, **caractérisée en ce que** quatre cylindres à fluide (1) sont prévus comme entraînement linéaire pour ajuster la hauteur du moule.

7. Presse chauffante pour pneumatique (100) selon la revendication 6, **caractérisée en ce que** l'élément de guidage (30) est disposé au centre des cylindres à fluide (1).

8. Presse chauffante pour pneumatique (100) selon la revendication 5, **caractérisée en ce que** l'élément de guidage (30) et le cylindre à fluide (1) sont logés au moins partiellement dans des ouvertures structurelles (11, 12) du banc de machine (10).

9. Presse chauffante pour pneumatique (100) selon la revendication 5, **caractérisée en ce que** la partie de moule inférieure (80) est formée par une plaque de pression (20) qui peut être déplacée par le dispositif (200) pour ajuster la hauteur d'un moule.

10. Presse chauffante pour pneumatique (100) selon la revendication 9, **caractérisée en ce que** la plaque de pression (20) comporte une ouverture (21) et un évidement concentrique (22) de sorte que l'élément de guidage (30) soit accouplé à la plaque de pression (20) par des moyens de liaison (32) et la plaque de pression (20) soit centrée par rapport à l'élément de guidage (30) de sorte que des forces longitudinales et transversales puissent être absorbées par l'élément de guidage (30).

11. Presse chauffante pour pneumatique (100) selon la revendication 10, **caractérisée en ce que** la plaque de pression (20) est accouplée à l'élément de guidage (30) par des moyens de liaison (32) de façon à pouvoir réaliser au centre un dispositif de retenue (60) destiné au pneumatique vert (110).

12. Presse chauffante pour pneumatique (100) selon la revendication 5, **caractérisée en ce que** les tiges de piston (2) du cylindre à fluide (1) sont accouplées par des moyens de liaison (4) à la plaque de pression (20) qui peut transmettre des forces longitudinales et qui permet des mouvements transversaux.

13. Presse chauffante pour pneumatique (100) selon l'une des revendications 10 à 12, **caractérisée en ce que** les moyens de liaison (4, 32) réduisent le transfert de chaleur de la plaque de pression (20) au dispositif (200).

14. Procédé d'ajustement de la hauteur d'un moule d'une presse chauffante de pneumatique (100) selon l'une des revendications 9 à 13, le procédé comprenant les étapes suivantes consistant à
a) positionner axialement la plaque de pression (20) par le biais des au moins deux cylindres à fluide (1),
b) activer le dispositif de verrouillage (40) par le biais d'un dispositif de pivotement (50) de manière à verrouiller axialement la partie de moule inférieure (80),
c) surveiller le blocage selon l'étape b) par surveillance de la position de la bague (42) au moyen d'au moins un capteur (44),
d) éventuellement commuter les au moins deux cylindres à fluide (1) sans pression lorsque la surveillance du blocage selon l'étape c) signale le blocage.

15. Procédé de fabrication d'un pneumatique à l'aide d'une presse chauffante pour pneumatique (100) selon l'une des revendications 6 à 13, le procédé comprenant les étapes de la revendication 14 et comprenant en plus les étapes suivantes consistant à
e) positionner axialement l'ébauche pneumatique (110) dans la direction longitudinale de la presse chauffante pour pneumatique (100) par le biais du dispositif de retenue (60),
f) abaisser une deuxième partie de moule (70) dans une position de pression par le biais du mécanisme de déplacement intégré dans les colonnes (120),
g) effectuer le processus de fabrication de pneumatique sous l'influence du temps, de la pression et de la température,
h) ouvrir la presse chauffante pour pneumatique (100) par le biais du mécanisme de mouvement intégré dans les colonnes (120) par déplacement de la deuxième partie de moule (70) jusque dans la position ouverte,
i) retirer le pneumatique du dispositif de retenue (60) à l'aide d'un dispositif de retrait (130).
